Europäisches Patentamt

European Patent Office

Office européen des brevets

(11) Numéro de publication : **0 470 890 A1**

## (12) DEMANDE DE BREVET EUROPEEN

(21) Numéro de dépôt : **91402138.1**

(51) Int. Cl.⁵ : **A01G 9/14**

(22) Date de dépôt : **30.07.91**

(30) Priorité : **08.08.90 FR 9010129**

(43) Date de publication de la demande :
**12.02.92 Bulletin 92/07**

(84) Etats contractants désignés :
**AT BE CH DE DK ES FR GB GR IT LI LU NL SE**

(71) Demandeur : **MEAC S.A.**
**31, rue Nicole, B.P. 371**
**F-28000 Chartres Cédex (FR)**

(72) Inventeur : **Caillet-Muller, Armelle**
**2 Rue de Mai**
**F-27200 Vernon (FR)**
Inventeur : **Lefevre, Daniel**
**7 ter Rue Baratte-Cholet**
**F-94200 Saint Maur (FR)**

(74) Mandataire : **Derambure, Christian et al**
**BUGNION ASSOCIES 55, rue Boissonade**
**F-75014 Paris (FR)**

(54) Matériau écran pour serres, l'agriculture et l'horticulture.

(57)   Matériau écran destiné à être appliqué sur un vitrage ou un film en matière plastique pour des serres, l'agriculture et l'horticulture, caractérisé par le fait qu'il comprend au moins un slurry à base essentiellement de particules de carbonate de calcium et/ou équivalent.

EP 0 470 890 A1

L'invention concerne un matériau écran pour serres, l'agriculture et l'horticulture, plus spécialement destiné à être appliqué sur un vitrage ou un film en matière plastique.

On connaît déjà plusieurs compositions possibles de tels matériaux écran. Ceux-ci se présentent, parfois, sous la forme d'une poudre qui, au moment de l'utilisation, doit être diluée à l'eau pour être appliquée par pulvérisation. Un tel matériau est pulvérisé sur un vitrage en verre, en polycarbonate, ou toute autre matière plastique ou encore un film en matière plastique lorsque l'ensoleillement doit être atténué, en particulier pendant les périodes où l'ensoleillement est le plus important. Selon d'autres compositions de tels matériaux se présentent de façon plus avantageuse sous forme d'un concentré liquide. De tels concentrés liquides peuvent cependant présenter trois limites : un manque de stabilité dans le temps du matériau stocké avant pulvérisation du fait d'un début de décantation ; un pouvoir couvrant insuffisant ou limité ; et une adhérence douteuse.

L'état de la technique peut-être illustré également par le document FR-A-2 581 057 qui concerne une composition fluide polyvalente, et notamment pouvant former paillage, comprenant essentiellement des boues de papeterie riches en fibres de cellulose et en charges minérales.

Le document JP-A-62 215 641 décrit une résine à base de :
– polymère oléfinique (PE haute, moyenne, basse densité, polypropylène, copolymère du type éthylène-acétate de vinyl, éthylène-acide acrylique etc.) ;
– ou de polymère styrènique (polystyrène, mélange de polymère du type polystyrène - polybutadiène et copolymère du styrène du type acrylonitrile - styrène) ;
– sulfate de baryum.

Mais, la résine ainsi obtenue est destinée à être transformée en film de revêtement de serres par extrusion-moulage (ou par un procédé analogue).

Le document JP-A-57 042 756 décrit un matériau destiné à être façonné en film de revêtement de serres. Ce matériau comprend (1) du PVC (ou un copolymère de celui-ci), (2) un mélange d'oxydes comprenant (a) de la silice et (b) un ou des oxydes métalliques choisis parmi ceux des groupes II, III et IV.

Le document JP-A-2 263 855 concerne un matériau de revêtement pour l'agriculture préparé par addition d'un ester d'acide gras et de dérivé de la glycérine à une résine à base de carbonate de calcium, feldspath, mica, silicate de calcium, hydroxyde d'aluminium et silice.

On peut aussi se référer aux documents US-A-4 886 972, EP-A-52427, JP-A-1 210 448 et JP-A-61055181.

L'invention a donc pour objet un matériau écran destiné à être appliqué sur un vitrage ou un film en matière plastique pour des serres, l'agriculture, et l'horticulture qui conserve les qualités avantageuses des matériaux de ce type connus à ce jour et qui, simultanément, soit stable dans le temps, présente un excellent pouvoir couvrant et une bonne adhérence.

A cet effet, un matériau écran conforme à l'invention comprend au moins un slurry à base essentiellement de particules de carbonate de calcium et/ou équivalent. En variante le matériau est constitué essentiellement par un tel slurry.

Dans une composition préférée, le matériau écran comprend outre le slurry à base essentiellement de particules de carbonate de calcium et/ou équivalent de 46% à 90% en poids, de l'eau jusqu'à 55% en poids, et au moins un liant en quantité inférieure à 10% en poids.

Le slurry considéré est à base de particules de carbonate de calcium et/ou de sulfate de calcium et/ou de silice et/ou de sulfate de baruym et/ou de carbonate double de calcium et de magnésium et/ou de silicate d'aluminium.

Les autres caractéristiques, variantes, avantages et propriétés de l'invention résulteront de la description qui suivra de plusieurs formes possibles de réalisation non limitatives.

L'invention concerne un matériau écran destiné à être appliqué sur un vitrage ou un film en verre, polycarbonate, matière plastique pour des serres, l'agriculture et l'horticulture de manière à atténuer l'ensoleillement par un effet ombrageant. L'invention vise aussi bien le matériau brut stocké en vue de sa mise en oeuvre ultérieure que le matériau déjà mis en oeuvre et appliqué sur un support tel que vitrage ou film. Elle vise enfin un tel support revêtu d'un tel (ou de tels) matériau(x).

Ce matériau se présente sous une forme fluide (plus ou moins liquide ou plus ou moins pâteuse) et comprend comme composé principal au moins un slurry à base essentiellement de particules de carbonate de calcium et/ou équivalent. En variante le matériau est constitué essentiellement par un tel slurry.

Dans le présent texte, l'expression "slurry" désigne une suspension de particules solides dans un milieu liquide obtenue par broyage au sein même de ce milieu liquide, les particules solides étant parfaitement stables vis-à-vis de l'agrégation et de la sédimentation.

Dans une réalisation considérée, le matériau comprend le slurry à base essentiellement de particules de carbonate de calcium et/ou équivalent de 46% à 90% en poids, de l'eau jusqu'à 55% en poids, et au moins un liant en quantité inférieure à 10% en poids.

Dans cette même réalisation, le matériau comprend, en outre : en premier lieu, au moins un épaississant en quantité inférieure à 0,6% en poids environ ; en deuxième lieu, au moins un produit mouillant en quantité inférieure à 0,5% en poids environ ;

en troisième lieu, au moins un bactéricide ; et en quatrième lieu au moins un produit antimousse évitant la formation de bulles lors de la fabrication du matériau et lors de sa mise en oeuvre. Le ou les épaississants, produits mouillants, bactéricides, produits antimousses se trouvent ensemble en quantité inférieure à 2,1% en poids environ.

Préférentiellement, le matériau comprend de 60% à 80% en poids de slurry à base essentiellement de particules de carbonate de calcium et/ou équivalent. D'excellents résultats ont été obtenus avec un matériau comprenant de l'ordre de 73% à 75% en poids de slurry.

Préférentiellement, le matériau comprend entre 10% et 40% en poids d'eau. D'excellents résultats ont été obtenus avec un matériau comprenant de l'ordre de 21% à 22% en poids d'eau.

Dans la réalisation considérée, le slurry à base essentiellement de particules de carbonate de calcium mis en oeuvre, a été de l'OMYALITE OM 60 de la Société OMYA. Un tel slurry comprend au moins 93% en poids et plus particulièrement au moins 98,5% en poids environ de carbonate de calcium sur l'extrait sec. Ce slurry a une densité de l'ordre de 1,69, un extrait sec de l'ordre de 65%, une blancheur ELREPHO-R457 norme DIN de l'ordre de 85, et un poids sec de l'ordre de 1,1 kg/l.

En ce qui concerne ses propriétés physiques, le slurry considéré a plus de 50% et notamment environ au moins 65% de particules de carbonate de calcium de taille inférieure à 2 microns. Sa surface spécifique est de l'ordre de $5,5m^2/g$. Le diamètre statistique moyen des particules est de l'ordre de 1,5 microns.

L'invention n'est toutefois pas limitée au cas de la mise en oeuvre de l'OMYALITE OM 60. Elle concerne aussi tout slurry équivalent ou voisin. Ainsi de bons résultats ont été obtenus avec un autre slurry : l'OMYALITE 90 de la même Société OMYA qui présente un pH de l'ordre de 9,5 ± 1, une densité de 1,895, un extrait sec de 75% ± 1 et une blancheur (ELREPHO-R457 norme DIN) de 86 ± 1. Le diamètre statistique moyen des particules est de l'ordre de 0,9 microns.

Ainsi, un slurry convenable à base de particules de carbonate de calcium et/ou équivalent a une densité de l'ordre de 1,6 à 1,9, un extrait sec de l'ordre de 65% à 75%, une blancheur ELREPHO-R457 norme DIN de l'ordre de 85 à 86 ; et a plus de 50 %, notamment environ au moins 65%, de particules inférieures à 2 microns, une surface spécifique de l'ordre de 5 à $10m^2/g$ et un diamètre statistique moyen de l'ordre de 0,9 à 1,5 microns.

L'invention concerne aussi les compositions dans lesquelles on utilise au lieu, ou en combinaison avec le carbonate de calcium, une ou des matières fonctionnellement équivalentes pour l'application considérée. De telles matières incluent : le sulfate de calcium, de silice, le sulfate de baruym, le carbonate double de calcium et de magnésium (dolomie), le silicate d'aluminium, potassium, sodium, magnésium (feldspath, talc, kaolin).

Un liant convenable est avantageusement choisi dans le groupe comprenant les dispersions de copolymères à base de styrène et d'ester acrylique et les dispersions aqueuses (à 50% par exemple) d'un copolymère d'acrylates ou équivalent.

Un épaississant convenable est à base d'hydroxyéthylcellulose ou équivalent.

Un produit mouillant convenable est par exemple un agent ionique sulfaté, sulfoné, carboxylé, un agent non ionique ou équivalent.

Un bactéricide convenable est par exemple une solution aqueuse de n-méthylol-chloracétamide et d'hétérocycles actifs ou équivalent.

Un produit antimousse convenable est par exemple un mélange de substances hydrophobes dans une huile minérale paraffinique.

Le matériau comprend également une base de nature et en quantité telle que le pH du matériau est ajusté entre 8 et 9,5 environ. Cette base est par exemple de l'ammoniaque à 20 % de concentration en quantité inférieure à 0,4% en poids, une solution de soude à 30% ou équivalent.

Exemple 1 :

Un matériau conforme à l'invention a été réalisé par mélange de 75% en poids d'un slurry OMYALITE OM 60 de la Société OMYA et d'un complément de 25% en poids d'eau.

Un tel matériau a un extrait sec de 48,7%. Il a une opacité élevée et une forte lavabilité.

Exemple 2 :

Le matériau a été réalisé par mélange des composants suivants avec les pourcentages en poids indiqués :

1. Slurry à base de particules de carbonate de calcium : 73,93%. OMYALITE OM 60 de la Société OMYA.
2. Eau : 21,74%.
3. Liant : 3,26%. MOWILITH DM 611 de la Société HOECHST.
4. Epaississant : 0,35%. NATROSOL 250 HR de la Société AQUALON.
5. Bactéricide : 0,26%. MERGAL K6N de la Société OMYA.
6. Produit mouillant : 0,2%. COATEX EMT 86 de la Société S.E.P.C.
7. Produit antimousse : 0,17%. NOPCO NDW de la Société HENKEL NOPCO.
8. Ammoniaque : 0,09%.

Ce matériau a un extrait sec de 50,9%, une densité de 1,43 et un pH de 9,0. Il a une opacité élevée et une bonne adhérence. En revanche sa lavabilité est sensiblement plus faible que dans l'exemple 1.

Exemples 3 :

D'autres réalisations dérivées de celle de l'exemple 2 ont été faites avec d'autres matières premières et d'autres compositions et/ou les mêmes matières premières que celles de l'exemple 2 mais avec d'autres proportions en poids relatives.

Slurry : OMYALITE OM 60, OMYALITE 90 de la Société OMYA.

En ce qui concerne le liant, on a utilisé également de l'ACRONAL 290D de la Société B.A.S.F. ainsi que du RHODOPAS DS 910 de la Société RHONE-POULENC. La proportion en poids est comprise entre 2% et 5% environ.

Comme épaississant cellulosique, on a utilisé également du TYLOSE MHB 10.000Y de la Société HOECHST ainsi que du BERMOCOLL E320FQ de la Société BEROL CHIMIE. La proportion en poids est comprise entre 0,2% et 0,5% environ.

A la place du MERGAL K6N, on a utilisé également du MERGAL AF de la Société OMYA et du PROXEL XL2 de la Société I.C.I. La proportion en poids est comprise entre 0,1% et 0,4% environ.

A la place du COATEX EMT 86, on a également utilisé du TRITON GR7 de la Société ROHM ET HAAS ou encore du SEMULSOL ES de la Société RHONE-POULENC.

On a également utilisé comme produit antimousse du BYK 033 de la Société B.Y.K. CHEMIE.

Les noms qui ont été indiqués précédemment peuvent être des marques déposées.

Exemple 4 :

1. Slurry : OMYALITE OM 60 : 74%.
2. Eau : 21,5%.
3. Liant : ACRONAL 290D : 3,5%.
4. Epaississant : NATROSOL 250 HR : 0,3%.
5. Bactéricide : PROXEL XL2 : 0,2%.
6. Produit mouillant : COATEX EMT 86 : 0,2%.
7. Produit antimousse : BYK 033 : 0,2%.
8. Ammoniaque : 0,1%.

Le matériau a un extrait sec de 51%, une densité de 1,42 et un pH de 9,1. L'opacité obtenue est élevée, l'adhérence sur le support d'application est bonne. Par contre la lavabilité du matériau est faible.

Exemple 5 :

1. Slurry : OMYALITE OM 60 : 73,4%.
2. Eau : 22%.
3. Liant : RHODOPAS DS 910 : 3,4%.
4. Epaississant : TYLOSE MHB 10.000Y : 0,35%.
5. Bactéricide : MERGAL AF : 0,25%.
6. Produit mouillant : TRITON GR7 : 0,2%.

7. Produit antimousse : BYK 033 : 0,2%.
8. Solution de soude à 30% : 0,2%.

Le matériau a un extrait sec de 50,9%, une densité de 1,43 et un pH de 9,0. Il présente des propriétés voisines de celles de l'exemple 4.

Exemple 6 :

1. Slurry : OMYALITE 90 : 74%.
2. Eau : 21,5%.
3. Liant : MOWILITH DM 611 : 3,5%.
4. Epaississant : NATROSOL 250 HR : 0,3%.
5. Bactéricide : MERGAL K6N : 0,2%.
6. Produit mouillant : COATEX EMT 86 : 0,2%.
7. Produit antimousse : NOPCO NDW : 0,2%.
8. Ammoniaque : 0,1%.

Le matériau a un extrait sec de 58,3%, une densité de 1,51 et un pH de 9,0. Son opacité est très élevée mais sa lavabilité est moyenne.

**Revendications**

1. Matériau écran destiné à être appliqué sur un vitrage ou un film en matière plastique pour des serres, l'agriculture et l'horticulture, caractérisé par le fait qu'il est constitué essentiellement par un slurry à base essentiellement de particules de carbonate de calcium et/ou de sulfate de calcium et/ou de silice et/ou de sulfate de baruym et/ou de carbonate double de calcium et de magnésium et/ou de silicate d'aluminium.

2. Matériau écran destiné à être appliqué sur un vitrage ou un film en matière plastique pour des serres, l'agriculture et l'horticulture, caractérisé par le fait qu'il comprend :
   – Au moins un slurry à base essentiellement de particules de carbonate de calcium et/ou de sulfate de calcium et/ou de silice et/ou de sulfate de baruym et/ou de carbonate double de calcium et de magnésium et/ou de silicate d'aluminium, de 46% à 90% en poids ;
   – de l'eau jusqu'à 55% en poids ;
   – au moins un liant en quantité inférieure à 10% en poids.

3. Matériau selon la revendication 2, caractérisé par le fait qu'il comprend en outre au moins un épaississant en quantité inférieure à 0,6% en poids environ.

4. Matériau selon la revendication 2, caractérisé par le fait qu'il comprend en outre au moins un produit mouillant en quantité inférieure à 0,5% en poids environ.

5. Matériau selon la revendication 2, caractérisé par le fait qu'il comprend en outre au moins un bactéricide.

6. Matériau selon la revendication 2, caractérisé par le fait qu'il comprend en outre au moins un produit antimousse.

7. Matériau selon la revendication 2, caractérisé par le fait qu'il comprend en outre un ou des épaississant(s), et/ou produit(s) mouillant(s), et/ou bactéricide(s), et/ou produit(s) antimousse, l'ensemble en quantité inférieure à 2,1% en poids environ.

8. Matériau selon la revendication 2, caractérisé par le fait qu'il comprend de 10% à 40% en poids d'eau.

9. Matériau selon la revendication 2, caractérisé par le fait qu'il comprend de l'ordre de 21% à 22% en poids d'eau.

10. Matériau selon la revendication 2, caractérisé par le fait qu'il comprend de 60% à 80% en poids de slurry à base essentiellement de particules de carbonate de calcium et/ou de sulfate de calcium et/ou de silice et/ou de sulfate de baruym et/ou de carbonate double de calcium et de magnésium et/ou de silicate d'aluminium.

11. Matériau selon la revendication 2, caractérisé par le fait qu'il comprend de l'ordre de 73% à 75% en poids de slurry à base essentiellement de particules de carbonate de calcium et/ou de sulfate de calcium et/ou de silice et/ou de sulfate de baruym et/ou de carbonate double de calcium et de magnésium et/ou de silicate d'aluminium.

12. Matériau selon la revendication 2, caractérisé par le fait que le slurry à base essentiellement de particules de carbonate de calcium et/ou de sulfate de calcium et/ou de silice et/ou de sulfate de baruym et/ou de carbonate double de calcium et de magnésium et/ou de silicate d'aluminium, comprend sur l'extrait sec, au moins 93%, notamment au moins 98,5% en poids environ de carbonate de calcium.

13. Matériau selon la revendication 2, caractérisé par le fait que le slurry à base essentiellement de particules de carbonate de calcium et/ou de sulfate de calcium et/ou de silice et/ou de sulfate de baruym et/ou de carbonate double de calcium et de magnésium et/ou de silicate d'aluminium a une densité de l'ordre de 1,6 à 1,9, un extrait sec de l'ordre de 65% à 75%, une blancheur ELREPHO-R457 norme DIN de l'ordre de 85 à 86.

14. Matériau selon la revendication 2, caractérisé par le fait que le slurry à base essentiellement de particules de carbonate de calcium et/ou de sulfate de calcium et/ou de silice et/ou de sulfate de baruym et/ou de carbonate double de calcium et de magnésium et/ou de silicate d'aluminium a plus de 50%, notamment environ au moins 65%, de particules inférieures à 2 microns, une surface spécifique de l'ordre de 5 à 10m²/g et un diamètre statistique moyen de l'ordre de 0,9 à 1,5 microns.

15. Matériau selon la revendication 2, caractérisé par le fait qu'un liant est choisi dans le groupe comprenant les dispersions de copolymères à base de styrène et d'ester acrylique et les dispersions aqueuses d'un copolymère d'acrylates.

16. Matériau selon la revendication 2, caractérisé par le fait qu'il comprend un épaississant à base d'hydroxyéthylcellulose.

17. Matériau selon la revendication 2, caractérisé par le fait qu'il comprend un produit mouillant choisi dans le groupe comprenant les agents ioniques sulfaté, sulfoné, carboxylé, les agents non-ioniques.

18. Matériau selon la revendication 2, caractérisé par le fait qu'il comprend un bactéricide tel qu'une solution aqueuse de n-méthylol-chloracétamide et d'hétérocycles actifs.

19. Matériau selon la revendication 2, caractérisé par le fait que le slurry est à base de particules de carbonate de calcium et/ou de sulfate de calcium et/ou de silice et/ou de sulfate de baruym et/ou de carbonate double de calcium et de magnésium et/ou de silicate d'aluminium.

20. Support tel que vitrage ou film en matière plastique pour serres, l'agriculture et l'horticulture, caractérisé par le fait qu'il est revêtu avec au moins un matériau selon la revendication 2.

Office européen
des brevets

**RAPPORT DE RECHERCHE EUROPEENNE**

Numero de la demande

EP    91 40 2138

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | JP-A-62 215 641 (DAINICHISEIKA COLOR CHEM)<br><br>* abrégé *<br>--- | 1,2,<br>10-15,<br>19,20 | A01G9/14 |
| D,A | JP-A-57 042 756 (SUMOTOMO CHEMICAL KK)<br><br>* abrégé *<br>--- | 1,2,<br>10-15,<br>19,20 | |
| D,A | US-A-4 886 972 (NAKAI ET AL.)<br>* revendications *<br>--- | 1,14 | |
| D,A | EP-A-0 052 427 (IMPERIAL CHEMICAL INDUSTRIES PLC)<br>* revendications *<br>--- | 1 | |
| D,A | JP-A-1 210 448 (MITSUBISHI KASEI VI)<br>* abrégé *<br>--- | 14 | |
| D,A | JP-A-61 055 181 (DAIDO KK)<br>* abrégé *<br>----- | 16 | **DOMAINES TECHNIQUES RECHERCHES (Int. Cl.5)**<br><br>A01G |

Le présent rapport a été établi pour toutes les revendications

| Lieu de la recherche | Date d'achèvement de la recherche | Examinateur |
|---|---|---|
| LA HAYE | 11 NOVEMBRE 1991 | PERNEY Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)